# EUROPEAN PATENT SPECIFICATION

(11) **EP 1 062 394 B1**
(45) Date of publication and mention of the grant of the patent: **11.07.2007**
(21) Application number: 99913902.5
(22) Date of filing: 16.03.1999
(51) Int. Cl.: E01C 11/14, E04B 1/21, E04G 23/02, F16L 13/10

(54) **METHOD FOR BONDING AND CREATING LOAD TRANSFER CAPABILITY BETWEEN CONCRETE MEMBERS**
VERFAHREN ZUM VERBINDEN UND HERSTELLEN VON LASTÜBERTRAGUNGSFÄHIGKEIT ZWISCHEN BETONTEILEN
PROCEDE DE LIAISON ET DE CREATION D'UNE CAPACITE DE TRANSFERT DE CHARGE ENTRE DES ELEMENTS EN BETON

(30) Priority: 16.03.1998 US 42591
(43) Date of publication of application: 27.12.2000
(73) Proprietor: Uretek USA, Inc., Tomball, TX 77377 (US)
(72) Inventor: FERM, Carl, A., Sugarland, TX 77479 (US); WYMAN, Ransome, J., Fountain Valley, CA 92708 (US); KRAUSS, Paul, Donald, Elmhurst, IL 60126 (US); ROGALLA, Ernest, Albert, Northbrook, IL 60062 (US)
(74) Representative: Price, Nigel John King
(86) International application number: PCT/US1999/005683
(87) International publication number: WO 1999/047762

(56) References cited:
- DE-B- 1 280 540
- US-A- 4 353 666
- US-A- 4 567 708
- US-A- 4 630 963
- US-A- 5 476 340
- US-A- 5 492 431

## Description

### Field of the Invention

This invention relates to bonding and creating load transfer between adjoining concrete members such as roadway slabs, post and beam supports, concrete pipe sections and other concrete structures.

### Background of the Invention

Concrete serves as the primary material for foundations, structural supports, roadways and other constructional structures. Unfortunately, concrete possesses several inherent drawbacks. First, concrete shrinks when it hardens which often results in cracking. Cracks may be controlled by placing joints (pre-planned cracks) in the concrete members, but the joint remains the weakest portion of a concrete structure. Second, cracks may develop over the life ofthe concrete member due to concrete's low tensile strength, shrinkage, and thermal expansions and contractions. Third, it may be difficult, time-consuming and expensive to join and bind adjacent concrete members together. The following examines some of the current methods and problems with bonding, repairing and restoring different types of concrete structures.

### Pre-existing Concrete Slabs

Concrete slabs provide the structural support and foundation for roadways, buildings and various structures. Joints and cracks in concrete are normally the weakest part of a concrete slab. A non-reinforced joint or crack cannot effectively transfer loads from one slab to the next. Concrete roadways with poor load transfer often suffer from faulting at the joint. Joint faulting is a well-known type of premature fatigue failure caused by the passage of traffic over transverse joints in concrete roads without sufficient load transfer. Advanced stages of faulting can lead to further cracking, crumbling, and damage of the concrete slab.

Modem pavements reduce the possibility of faulting by improving the sub-base support, including dowels to transfer loads between the slabs at the joints, and sealing the joints. Properly designed joints, along with regular maintenance programs, have made possible the construction of durable, high-quality concrete pavements that will perform well for many years.

Unfortunately, many existing roads do not contain adequate design features to create permanent load transfer. Many roads were not designed to use dowels. For some of the roads with dowels, the dowels have failed. Other roads have cracked under severe or unpredicted use. Many of these roads have developed faulting problems.

Faulting originally was cosmetically repaired with asphalt overlays and diamond grinding. These methods covered up or removed the fault differential, but they did not address the poor load transfers at the joints and cracks. As a result, faulting often reoccurred.

Newer concrete pavement restoration techniques attempt to address the problem of poor load transfer. Highway agencies have tried to retrofit dowels, double-V shear devices, figure-eight devices, and miniature I-beam devices to restore load transfer with some success. The problems with these techniques lie within the implanted devices and the material holding the devices in place. In these techniques, the implanted device transfers the vast majority load across the joint. These devices may fail if they are subject to unpredicted loads or are improperly placed in the encasing medium. Often it is difficult to ensure that the implanted device is properly positioned. Furthermore, many of these devices are made of material which could corrode and fail or, even worse, pose a safety hazard should one come loose. Finally, load transfer devices sometimes do not effectively bond with the material encasing it. Without bonding, the surrounding material cannot help to bear the load across the joint.

For example, US-A-5476340 discloses the use of double-T shaped metal brackets inserted into double-T shaped slots designed to accommodate the brackets. The bracket provides tensile strength across a crack in the concrete slab.

The second problem with current load transfer restoration techniques is with the material used to encase the load-bearing device. The materials used often cannot effectively bear tensile loads and/or are difficult to handle in the field. Material used to encase load transfer devices include cementitious grout and polymer concretes containing polyesters, epoxy or methacrylate. These materials are designed to match the thermal expansion modulus of concrete, but cannot bear sufficient tensile loads or are not flexible enough to distribute loads throughout the material. Furthermore, these materials are too viscous to flow into narrow slots and cracks in concrete. The primary function of the filler materials is to bond the load-carrying device to the adjacent slabs and to keep the load-carrying device in place. Nothing suggests using filler material to transfer loads across concrete joints. What is needed is an improved method of restoring or improving load transfer across joints in pre-existing concrete pavement.

### Precast Concrete Roadways

In addition to restoring already existing concrete roadways, similar problems exist when joining precast or prefabricated concrete slabs together. Currently, the vast majority of concrete roads are poured in place rather than built with prefabricated concrete sections. Using prefabricated slabs would be faster and cheaper when building concrete roads. However, it is difficult to bond and create load transfer between adjacent prefabricated slabs. Since the slabs are precast in individual slabs, it is impossible to permanently set dowels in the poured concrete of two adjacent slabs. Currently, the only way to create load transfer across adjacent slabs is to use one of the restoration techniques previously discussed. However, these techniques present the same drawbacks for precast slabs. What is needed is a novel method for building concrete roadway that allows the effective use of precast or prefabricated concrete slabs with the ability to transfer loads between the slabs.

### Concrete Structural Supports

Many buildings, bridges and other structures use post and beam concrete supports. Often the post and beam are cast in place at great cost of time and expense. If prefabricated post and beam structures are used, the issue becomes how to effectively join and lock the structures together. One solution is to use metal bolts. Unfortunately, the bolts can crack and weaken the concrete supports when inserted. Further cracking results from the differences between the thermal expansion rates for the concrete and metal. Rust also reduces the ability of the metal bolts to lock the post and beam together. The industry still searches for a quick and effective way to bond post and beam supports together without long-term disadvantages.

### Concrete Structures

Some concrete structures, such as concrete pipes and culverts used underground for water and sewage, are prefabricated in sections and connected together once in place. Current methods of connecting concrete pipe are often ineffective, expensive and/or difficult to implement.

### Summary of the Invention

According to the present invention there is provided a method for joining concrete members at a joint between first and second concrete members, comprising the steps of:
cutting a slot into said first and said second concrete members, said slot extending generally perpendicular to said joint;
removing excess material from said slot and said joint;
placing aggregate into said slot and joint;
placing a joint tie having first and second ends in said slot, whereby said first end extends into said first concrete member and said second end extends into said second concrete member; and
integrally filling said slot and said joint with polymer concrete.

There are described and illustrated hereinafter methods for bonding and improving load transfer between two adjoining concrete structures. The method may be used for joining adjacent roadway slabs, precast roadway slabs, pipes, culverts, post and beam supports, and other concrete structural members. The hereinafter described and illustrated methods involve cutting a slot perpendicular to the joint between the two structures and integrally filling the slot and joint with polymer concrete. The described and illustrated methods further involve removing excess material such as filler material, rubble, and dust from the slot and joint after cutting the slot, drying the slot and joint, using aggregate in the slots and joints to improve the characteristics of the polymer concrete, and cutting a joint slot generally along the joint or crack to remove the excess material from the joint slot and fill the joint and slot with polymer concrete.

The methods further include placing a joint tie in the slot and encasing it in polymer concrete. The joint tie should extend into the portions of the slots defined by the cuts into the two adjoining slabs. The joint tie may be a fiberglass reinforced plastic tie containing a hole or a pattern of holes or slots through which polymer concrete can flow and interlock with the joint tie.

It may be advantageous to locate the slot in areas of normal tire travel where the majority of the load experienced by a road slab is felt.

It may also be advantageous to use the disclosed method for transverse joints, horizontal joints, cracks or any other place in any type of concrete slab that has lost its ability to effectively transfer load over a particular area.

It may also be an advantage to use a high strength, flexible, and low viscosity polymer concrete to bear the load transfer across a joint. The polymer concrete may contain surfactants with isocyanate reactive sites, low viscosity plasticizers, and polymerization accelerating catalysts.

### Brief Description of the Drawings

The novel features believed characteristic of the invention are set forth in the claims. However, the invention itself, the preferred mode of use and advantages thereof, will best be understood by reference to the following detailed description of illustrative embodiments when read in conjunction with the accompanying drawings, wherein:
**Figure 1** depicts a top view of two partial concrete slabs with slots cut in accordance with the invention;
**Figure 2** depicts a cut-away view of a slot from Figure 1;
**Figure 3** depicts a joint tie;
**Figure 4** depicts Figure 2 at a later stage of the claimed invention;
**Figure 5** depicts a cut-away view of Figure 4 at a hole in the joint tie;
**Figure 6** depicts a top view of the two lanes of concrete highway illustrating the many uses of the current invention;
**Figure 7** depicts a perspective view of integrally poured polymer concrete in various joints and slots.
**Figure 8** depicts a side perspective of the present invention as applied to potholes; and
**Figure 9** depicts a top view of the present invention as applied to potholes.
**Figure 10** depicts a cross-sectional view of an embodiment of an accumulator joint.
**Figure 11** depicts a side perspective of precast concrete slabs used for roadway construction in accordance with the present invention.
**Figure 12** depicts a side perspective of precast concrete slabs placed over a pre-existing roadway in accordance with the present invention.
**Figure 13** depicts a top view of a precast concrete slab that may be used with the present invention.
**Figure 14** depicts a top view of two concrete pipes joined together in accordance with the present invention.
**Figure 15** depicts a cross-sectional view of Figure 14 at the joint between the concrete pipes.
**Figure 16** depicts a top view of a post and beam connected in accordance with the present invention.
**Figure 17** depicts a side view of Figure 16.
**Figure 18** depicts a back view of Figures 16 and 17.
**Figure 19** depicts a multi-story structural support using the present invention.

### Detailed Description of the Invention

The following describes several embodiments ofthe present invention to create adhesion and load transfer between adjacent concrete structures.

### Pre-existing Concrete Restoration

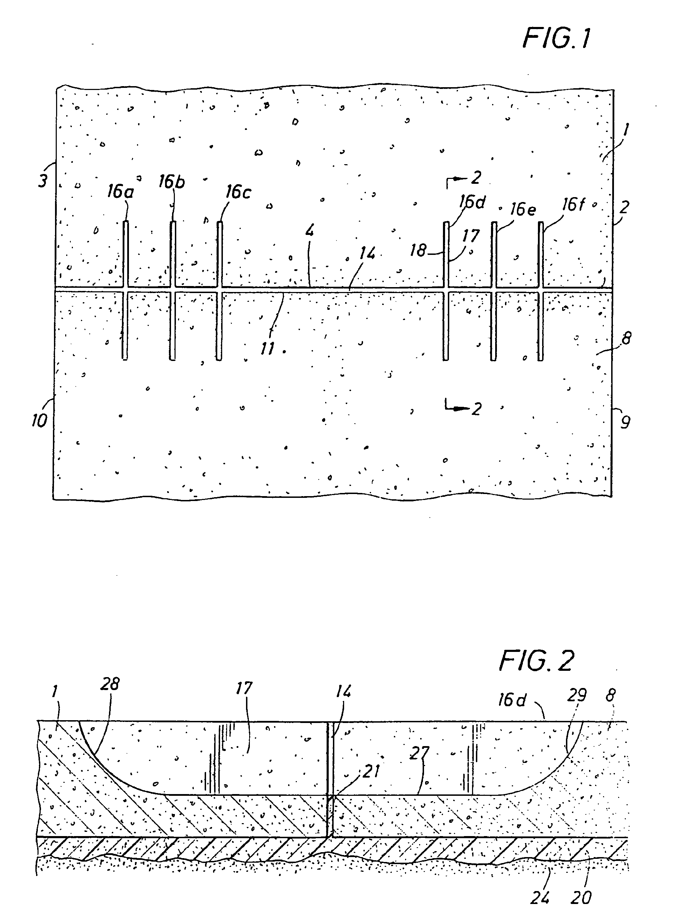

Figures 1 and 2 illustrate embodiments of how to cut the slots needed for the present invention. Slots 16a-16f are cut generally perpendicular to transverse joint groove 14. Transverse joint groove 14 is formed by joint edge 4 of slab 1 and joint edge 11 of slab 8. Transverse joint groove 4 typically extends from slab side edges 3 and 10 to slab side edges 2 and 9 and extends downward to base 20. Slots 16a-16f are cut so that approximately half of the length of each slot is cut into adjacent slabs 1 and 8.

The slots may be of varying sizes and shapes. Using slot 16d as an example, each slot has curved end 28 and 29 resulting from the circular saw used to cut slot 16d. The shape of slot 16d is determined in part by the method used to cut the slot and may be of varying shapes. The slots as used in the invention may be of varying widths, depths and lengths. Slots are typically narrow, over half the depth of the slab, and long. In one embodiment, the slots are between 1.27 to 7.62 cm (½ inch to 3 inches) wide, 15.24 cm (6 inches) deep in a 22.86 cm (9-inch) slab, and 91.44 cm (36 inches) long at the top of the slot and 45.72 cm (18 inches) long at mid-slab depth.

Slots 16a-16d may be cut in any way known to the art, including using the more common circular diamond-saw or a modified milling machine. In diamond-saw slot cutting, multiple saw cuts are made to form the edges of the slots. The diamond-saw cutting usually leaves fins in between the saw cuts that may be removed in any way known to the art, for example, with a 13.6 kg (30-pound), hand-held jackhammer. A modified milling machine creates a slot in a one pass and does not leave behind fins.

The most effective slot pattern is to concentrate the slots on the wheel paths of the roadway. As seen in Figure 1, slots 16a-16c and 16d-16f are cut along the left and right wheel paths, respectively, ofthe lane formed by slabs 1 and 8. Most current dowel retrofitting methods utilize three slots per wheel path. However, one of the advantages of the present invention is the superior tensile and deflection strength of the invention as compared to conventional dowels. In tests, the preferred polymer concrete with fiberglass tie has a superior tensile and deflection strength in comparison to rebar dowels in grout. The increased strength means that less slots may be cut per wheel path than traditional dowel retrofitting methods. When less slots are used, then the expenses of restoring load transfer is reduced, and roads are closed for a shorter period of time to traffic.

Once the slots are cut, they must be prepared. If diamond-saw cutting is used, then the fins must be removed. Also, it is often desirable to flatten the bottom of the slots much like slot bottom 27. Slots may be flattened using a small hammerhead bit mounted on a light jackhammer to remove rock and stubble from the slot bottom 27. Rock and stubble can prevent joint ties used in the slot from sitting level and create a non-uniform layer of polymer concrete. However, a smooth slot bottom 27 is not as critical in the success of the load transfer capabilities as it is with other methods such as retrofitting dowels. Improperly placed dowels can result in pavement lockup or dowel socketing. Pavement lockup can occur when the joint or crack cannot open and close properly with temperature changes. Dowel socketing is the widening of the dowel hole which results in loss of load transfer. The disadvantages from pavement lockup and the possibility of dowel socketing are reduced or eliminated by the current invention.

Material in transverse joint groove 14 should be removed. The method for cleaning transverse joint groove 14 will be determined in part on what is in the groove. Available methods include using a diamond-saw, light jackhammer, or other tool.

Once the slot 16d is flattened, and the bulk of the material in transverse joint groove 14 removed, then slot 16d and transverse joint groove 14 should be cleaned to improve the bonding ability of the polymer concrete to joint ends 4 and 11 of slabs 1 and 8, respectively, and side walls 17 and 18 of slot 16d. Cleaning is typically accomplished by sandblasting the sides and bottom of the slot and then airblasting them. Other methods known in the art may also be utilized. A slot is usually considered clean if it does not feel dusty to the touch. Once the slot is clean, it should be dry to improve bonding of the polymer concrete to the concrete.

Dowel retrofitting techniques usually require caulking of the joint or crack on the bottom and sides of the slot to keep patching from entering the slot. The patching material used for dowel retrofitting can cause point bearing stresses when the joint or crack closes, causing spalling and possible failure. The polymer concrete does not create significant point bearing stresses. The addition of polymer concrete to the slot or crack improves the overall strength, durability and load transfer of the present inventive method.

Once a slot is prepared, it may be filled with the load transfer material. The present invention utilizes a low viscosity, high strength, and flexible concrete polymer as the load transfer material. The preferred embodiment is a polymer concrete named Concrete Welder or Uretek 600 manufactured by Percol of Fountain Valley, California. The preferred polymer concrete is a two-component urethane polymer system mixed in a 1:1 ratio. One component comprises of polyester polyol, phthalate ester, organo, organo metallic catalysts and glycol with a specific gravity of 1.017, a boiling point of 240°C (464°F) and a viscosity of 0.024 pascal seconds (24 cps) at 22.7°C (73°F). The second component comprises of an aryl di- and poly-isocyante blend which includes diphenylmethane 4,4' diisocyanate and a diester plasticizer. Many diester plasticizers can be used including those based on alcohols and butyric, phthalic, and adipic acids. Other di- and poly-isocyanates which can be used in this invention include any di- or poly-aryl isocyanate including 2,4 and 2,6 Tuloene Diisocynates. Mixed, the two components have a pot life of 60 seconds at 22.7°C (73 °F) and a cure time of approximately 10 minutes at 22.7°C (73 °F). Cured, the polymer concrete has a specific gravity of 1.07 (ASTM D-792), a hardness of 70 (Durometer D, ASTM D-2240), a tensile strength of 29.6 MPa (4300 psi) (ASTM D-412), a less than 10% elongation at break (ASTM D-412), a tear strength of 275 (ASTM D-624), a compression strength of 29.3 MPa (4250 psi) (ASTM C-39), and a bond strength to PCC of 3.4 MPa (500 psi). The invention encompasses other polymer concretes with different compositions and specific characteristics that fall within the scope of the invention.

The polymer concrete used for the present invention should have a low viscosity to completely saturate the aggregate in a narrow slot and to soak into the porous concrete through capillary action to improve the bonding between the polymer concrete and the sides of the slots. Narrower slots minimize the effect of the different rates of thermal expansion between the polymer concrete and the adjoining concrete, thereby minimizing the resulting stresses. Better bonds allow for better load transfer between the concrete and the polymer concrete. A viscosity of less than 0.2 pascal seconds (200 centipoises) is recommended. Viscosity may be lowered by using low molecular weight materials for the polymer concrete or by adding low viscosity plasticizers.

The preferred polymer concrete also exhibits high flexibility and high tensile strength. The high tensile strength is needed to withstand the loads applied to the load transfer material. However, the flexibility allows the material to transfer the load over a greater area of the load transfer material. The bond between the load transfer material and the concrete allows that load to be transferred in turn to the concrete. The flexibility also reduces stresses from thermal expansion since the material will deform somewhat under compression.

Surfactants and/or wetting agents (completely water soluble chemicals) such as ethanolamine, diethanolamine, triethanolamine, isopropanolamine, diiso propanolamine, triisopropanolamine, ethylene glycol, diethyleneglycol, and polyethylene glycols may be added to the polymer concrete to improve its adhesion to the concrete sides of the slots. These surfactants are of a special type that have isocyanate reactive sites. The surfactants wet the surface then become part of the backbone of the polymer. Thus, they provide wetting, but become immobilized by polymerization so that it cannot be dissolved by water since it has performed its function. The polymer concrete should have a bonding strength between approximately 2.41 to 3.45 MPa (350 to 500 psi).

Cross linkers such as Quadrol, glycerine, trimethylolpropane, and low molecular weight polypropylene triols and catalysts such as Tin, Bismuth, Mercury, Lead, and Iron polymerization catalysts, as well as tertiary amine catalysts such as triethylene diamine also may be added to reduce the moisture sensitivity of the mixture. The cross linkers and catalysts accelerate the reaction speed of polymerization. The rapid curing reduces the effect of wet surfaces on the polymer concrete.

The polymer concrete has profound improved results when use with aggregate such as sand in the slot. The aggregate can be placed in the slot prior to adding the polymer concrete during or after the polymer concrete is placed in the slot to cure. One embodiment uses a dry 12/20 graded rounded sand as a filler. The sand creates a rough texture which forms a mechanical bond with the side of the concrete slots and helps to transfer load from the load transfer material to the concrete. Other suitable aggregates may be used within the scope of the invention. The effective shear strength of the polymer and aggregate combination should be at least 3.45 MPa (500 psi), and preferably above 6.9 MPa (1,000 psi).

The polymer concrete may be mechanically placed into the slot with any of the suitable and known polymer injectors after the components of the polymer have been mixed. The aggregate sand may be placed in the slot before or during the injection of the polymer. The sand should substantially fill the slot with the polymer creating the bond between the sand particles. One advantage of the polymer concrete is that the aggregate and the polymer are placed into the slot in two separate steps. Because the aggregate and the polymer are not mixed until they reach their final destination, the polymer may have a rate of polymerization up to 10 times faster or more than filler materials mixed before placement. With the faster reaction time, the cure time will be shorter and the polymer concrete will be less sensitive to temperature. Therefore, roads may be closed for shorter periods of time and worked on in broader temperature ranges. The pre-placed aggregate also minimizes operator skill in applying the polymer concrete because the material is not significantly affected by outside factors due to its fast rate of polymerization.

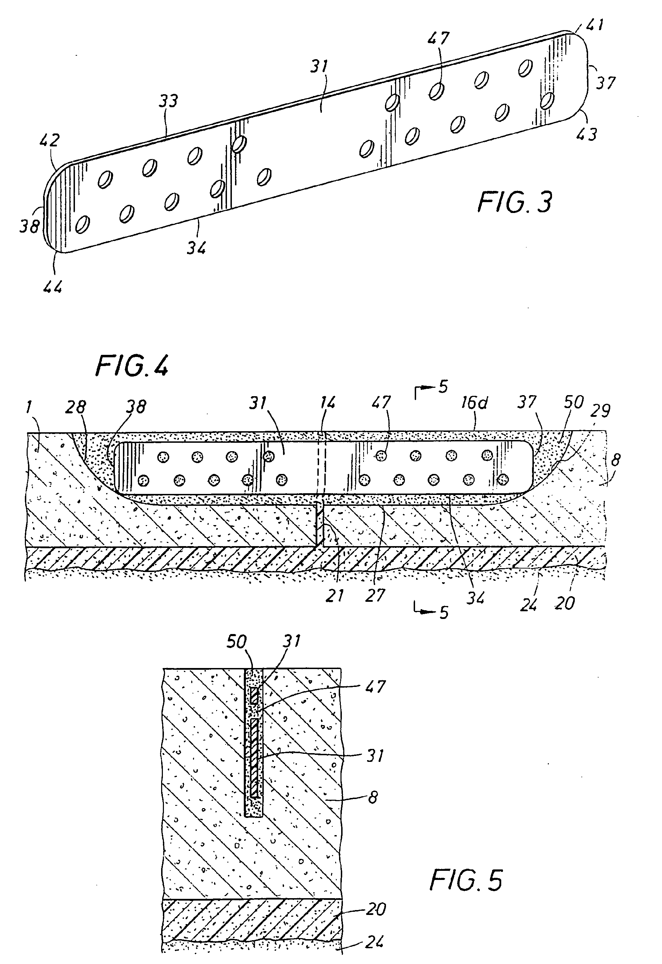

In addition to the polymer concrete, a joint tie is used to help transfer the load along with the polymer concrete. Any joint tie may be used within the scope of the invention, but a joint tie that is able to work in harmony with the polymer concrete is preferred. For example, joint tie 31 shown in Figures 3 through 5 is a fiberglass reinforced plastic joint tie. Joint tie 31 has a narrow top edge 33 and bottom edge 34 to fit into slot 16d. The corners at joint tie 31 are rounded at top corners 42 and 41 of ends 38 and 37, respectively. Likewise, bottom corners 44 and 43 of ends 38 and 37, respectively are also rounded. The rounded corners will reduce the risk of tire blowout in the unlikely event that joint tie 31 comes loose out of slot 16d during the life of the pavement. Joint tie 31 may also have holes such as hole 47 which allows polymer concrete 50 to penetrate and lock joint tie 31 in position within slot 16d after polymer concrete 50 has cured. The polymer concrete 50 in hole 47 also helps to transfer loads between joint tie 31 and polymer concrete 50. The hole pattern is staggered in a preferred embodiment to increase the strength of joint tie 31 by improving stress distribution in the tie. In a preferred embodiment, holes are not placed in the middle section of joint tie 31 because the greatest shear forces are at this location. The material ofjoint tie 31 forms a chemical bond with polymer concrete 50 which improves the load transfer between joint tie 31 and polymer concrete 50

Joint tie 31 should be placed in slot 16d before polymer concrete 50 is poured into slot 16d. If an aggregate is used, then joint tie 31 may be properly fixed in position in slot 16d. Joint tie 31 should be placed so that it overlaps into both slabs I and 8, preferably equally overlapping into each slab. Joint tie 31 may be placed at various depths within slot 16d, but the preferred position is to center joint tie 3 1 in slot 16d.

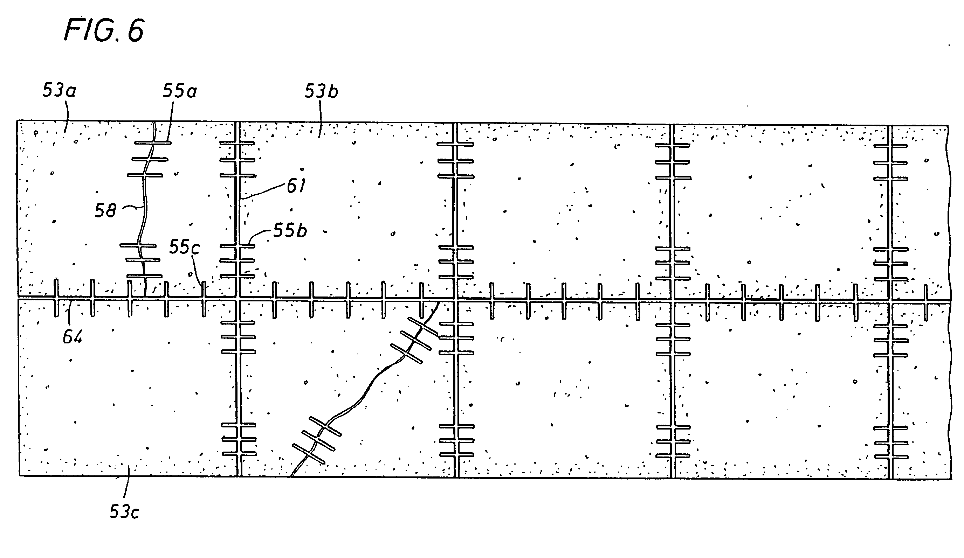

Figure 6 illustrates the numerous places on a concrete roadway that the present invention may be used. As described earlier, the present invention may be used to restore load transfer between slabs 53a and 53b at the transverse joint 61 with polymer concrete filled slots such as filled slot 55b. The present invention may also be used to restore load transfer across crack 58 with filled slot 55a. A crack for the purposes of this invention is the same as any other joint, except that it was not planned. A crack, like any other non-reinforced joint, cannot adequately transfer loads and is subject to faulting over time. The load transfer capabilities of crack 58 are restored much in the same way as transverse joint 61. A diamond-saw may be needed to open crack 58 wide enough to fill with polymer concrete and to remove excess material in crack 58. The present invention may also be used to restore load transfer between slabs 53a and 53c at horizontal joint groove 64 with polymer concrete filled slots such as filled slot 55c. Since vehicles do not travel over horizontal joint grooves in their typical wheel paths, the filled slots at the horizontal joint groove may be evenly spaced. The number and spacing of filled slots along a horizontal joint groove will depend on the experienced loads and condition of the roadway. For example, five polymer concrete filled slots may be used to tie two 15 foot slabs together under specific circumstances.

As seen in Figure 6, several slabs may be tied together using the present invention. However, every slab should not be tied together. Concrete expands and contracts and, thus, needs intermittent spaces or joints to allow for concrete movement. Therefore, one alternative embodiment allows for an untied joint after several successive tied joints. This untied joint is referred to herein as an accumulator joint.

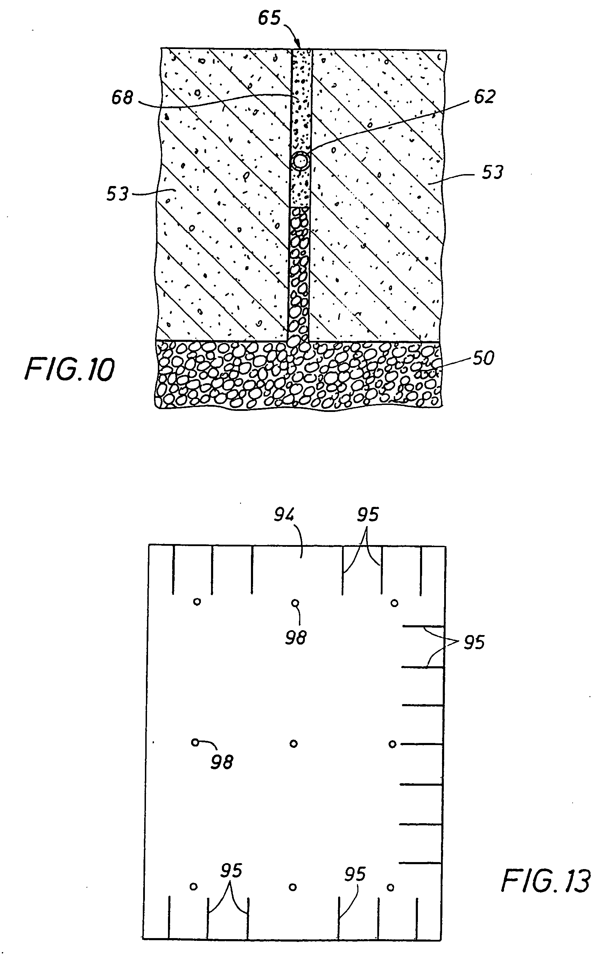

The accumulator joint, in one embodiment, is spaced every 13.7 to 36.6 m (45 to 120 feet), depending on the projected length of expansion of the concrete slabs and the room allowed for expansion at the accumulator joint. One embodiment of an accumulator joint is shown in Figure 10. The accumulator joint 65 exists between two untied slabs 53. The slabs 53 may first be leveled and stabilized with expandable polyurethane foam 67 or similar substance in manners discussed in U.S. Patent No. 4,567,708. Leveling and stabilizing slabs 53 at accumulator joint 65 helps eliminate and/or prevent faulting at the joint. The accumulator joint 65 is filled with a flexible material 68 capable of sealing accumulator joint 65 and accommodating the movements of the slabs during expansion and contraction.

Another embodiment of the accumulator joint 65 inserts a hollow tube 62 along the length of the accumulator joint when injecting the flexible material 68 into the joint. When slabs 53 expand and reduce the width of accumulator joint 65, the flexible material 68 tends to be pushed upward and extend above the top surface of slabs 53. When cars and trucks drive over the overflowing flexible material 68, the weight forces the material back down into the accumulator joint and into the void created by the hollow tube 62. Hollow tube 62 essentially creates a void for excess material 68 to go so a bump is not created at the surface of slabs 53.

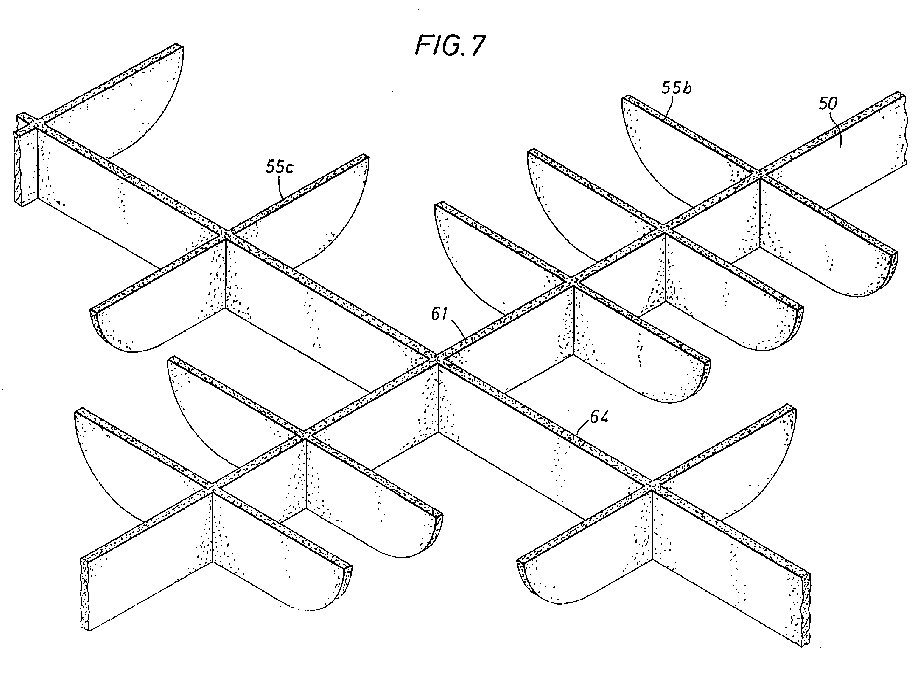

Figure 7 illustrates a integral polymer concrete connecting various slots and joints with the surrounding concrete cut away. The integral structure includes the polymer concrete 50 from transverse joint groove 61, filled slot 55b, horizontal joint groove 64 and filled slot 55. The integral structure helps distribute transfer loads and increases the overall strength ofthe structure.

Many joints in need of load transfer restoration have already begun to fault. If the concrete has faulted, then the fault should be eliminated before the load transfer is restored with the present invention. Several methods are employed in the art to deal with faults, but the preferred method is to inject expandable polyurethane foam or other suitable expandable material under sunken or faulted concrete to lift, level and stabilize the concrete. Such method is further explained in U.S. Pat. No. 4,567,708. Even if the slabs at the joint do not show signs offaulting, it is preferred to stabilize the base with the expandable polyurethane foam mentioned above. Base 20 of slabs 1 and 8 in Figure 1 has been stabilized with injected polyurethane. Sub-base 24 is the original aggregate sub-base used to support slabs 1 and 8. Injected polyurethane also fills and seals lower portion 21 of joint 14.

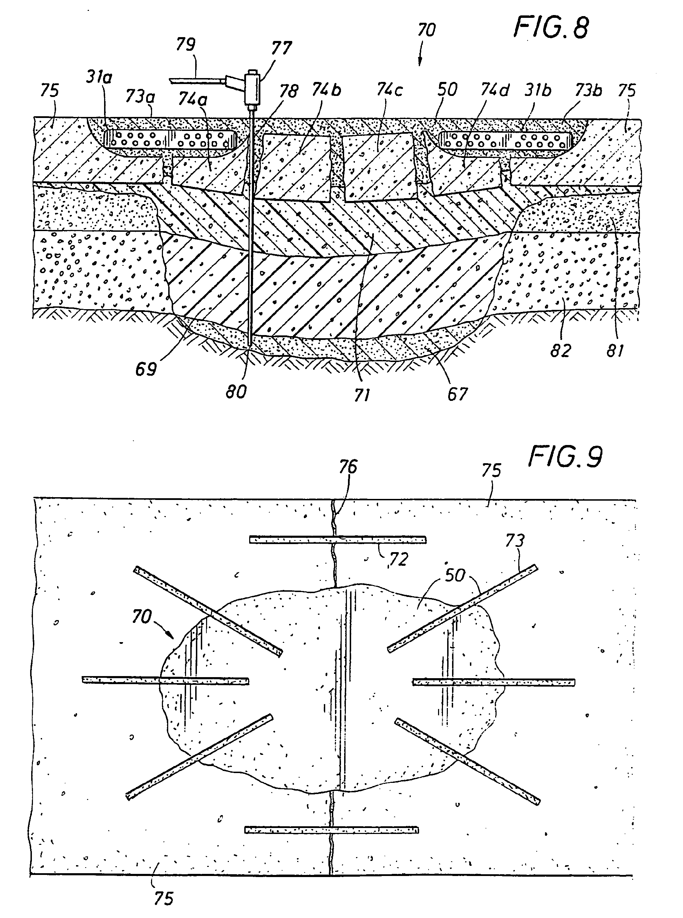

The present invention may also be used to restore load transfer over pothole 70 in Figures 8 and 9. Joint ties 31a and 31b are placed in slots 73a and 73b to transfer load from unbroken concrete 75 to broken concrete pieces 74a and 74d, respectively. Polymer concrete 50 is used not only to fill slot 73a and 73b, but also to encase broken concrete pieces 74a through 74d. Polymer concrete 50 along with joint ties 31 a and 31 b effectively transfer load across pothole 70 and to unbroken concrete 75.

The base support of pothole 70 may be improved before restoring load transfer capabilities to pothole 70. As shown in Figure 8, one method of improving the base support is to inject expandable polyurethane foam 67 into any deep voids under pothole 70. Expandable polyurethane may also be injected into base 81 and sub-base 82 to form a stronger polyurethane and base mixture 71 and polyurethane and sub-base 69. The expandable polyurethane foam may be injected in much the same way as described in U.S. Pat. No. 4,567,708 with hose 79 carrying expandable polyurethane components to gun 77 to inject through tubing 80. Foam injection using water-blown foams creates mold pressure and lifting.

For applications where lifting is not desired since the pavement is already to grade, only support and sealing from water intrusion is necessary. A foam that satisfies this requirement is made by blending nitrogen or carbon dioxide gas with a urethane polymer mixture comprised of polyols with polyisocyanates by blending with a high speed mechanical mixer under pressure. The mix also contains foam stabilizers and catalysts known to those familiar with the art. The mixture is injected under the slab where it expands because of the lower pressure. Pre-expanded polyurethane foams, with no residual expansion capability, may also be used for such void filling. This method may also lift some of the original broken concrete pieces 74a through 74d toward their original positions.

As seen in Figure 9, pothole 70 can have load transfer restored through polymer concrete 50 filling pothole 70 and slots such as slot 73. Polymer concrete 50 also serves to smooth out the top surface of pothole 70. Polymer concrete slots may also be used to restore load transfer capabilities across cracks extending from pothole 70, such as with slot 72 across crack 76.

### Precast Roadway Construction

The present invention effectively enables the use of precast slabs in the construction of roadways. Currently, precast slabs are not used for roadway construction because there is no effective way to create load transfer between the slabs. By the very nature of the individual precast slabs, dowels cannot be precast into the slabs for load transfer. Retrofitting slabs with dowels has the same drawbacks as retrofitting old concrete roadways, as explained above. Without effective and permanent load transfer, state and federal highway departments have been reluctant to use precast roadways, even though the cost and time to lay new roads would be greatly reduced.

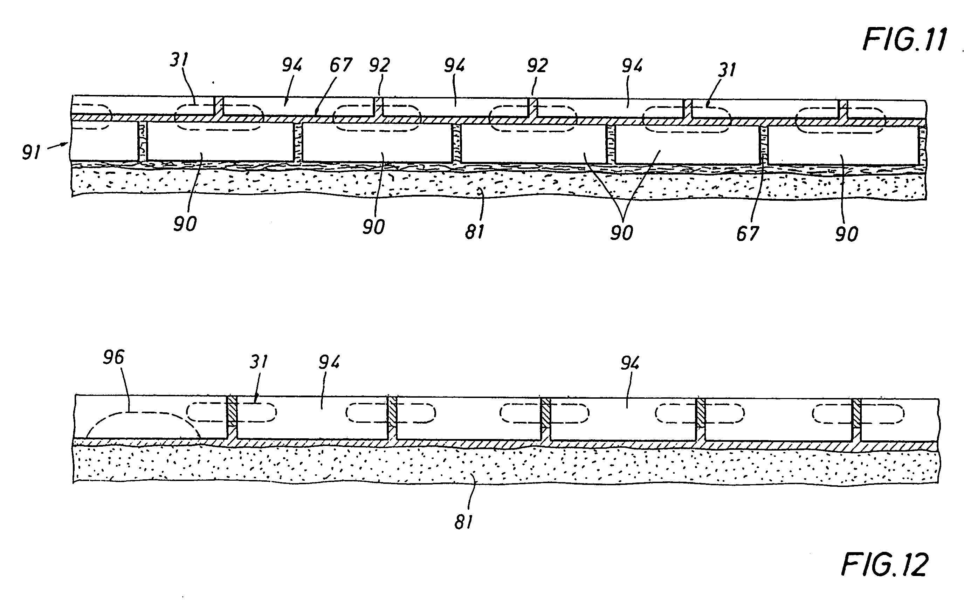

The present invention provides the necessary load transfer between precast slabs in a manner similar to restoring load transfer between old slabs. Figure 11 shows the use of precast slabs in creating a new roadway within the scope ofthe present invention. Concrete precast slabs 94 are placed on conventional base 81. Then each slab may be leveled and stabilized with an expandable material such as an expandable polyurethane foam 67 or void-filling foam, as described above and in U.S. Patent No. 4,567,708 in more detail. Once the slabs are level and stabilized, slots may be cut perpendicularly to the joints in the same manner as described for restoring load transfer for pre-existing roadways. Then joint ties 31 may be inserted into the slots to increase the strength of the load transfer device. Then the slabs are tied together with a polymer concrete 50 filling the joints and slots as previously described. The method used to bond the slabs together is similar to the method of restoring load transfer to pre-existing roadways. Any differences in applying the method, if any, would be obvious to a person of ordinary skill in the art.

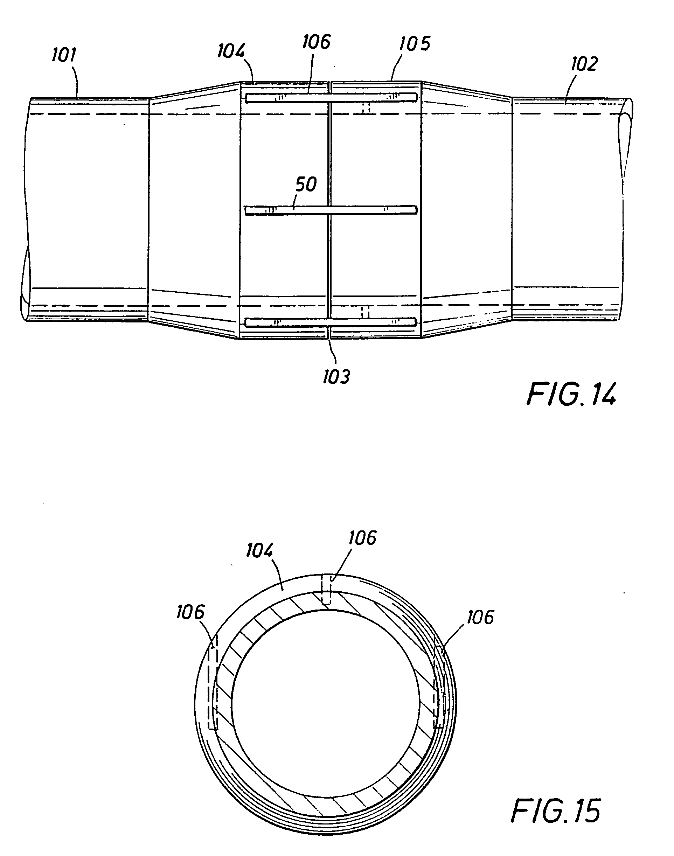

The use of precast slabs 94 shown in Figure 13 further reduce road construction time by eliminating the amount of work to do on site. Precast slab 94 already has half joint slots 95 and injection holes 98 placed into precast slab 94 before the slab is used for road construction. The half joint slots 95 and injection holes 98 can be formed during casting of the precast slab 94 or cut and drilled into a precast slab before it is delivered to the construction site.

Once at the construction site, precast slabs 94 are placed so that the half slots 95 of adjacent precast slabs 94 are aligned. When properly placed and aligned, the final configuration of slabs may look similar to the slabs of Figure 6 absent the cracks. Once the precast slabs 94 are aligned, the slabs are leveled and stabilized by injecting an expanding polyurethane foam, or other suitable material such as pre-expanded polyurethane foam, through injection holes 98 in the manner previously discussed herein.

One embodiment of precast slab 94 uses a cavity 96 on the underside of precast slab 94 to reduce the weight of the slab. The cavity 96, properly designed, will provide the necessary structural support with less material. For example, a dome-shape cavity can remove up to one-third of the slab's weight without significantly affecting the slab's performance. The reduced weight will decrease material and transportation costs. Once in place, the cavity 96 can be filled with an expandable polyurethane foam 67, pre-expanded polyurethane foam, or other suitable void-filling material.

Another embodiment of the present invention uses precast concrete slabs 94 laid on top of pre-existing roadway 91, as illustrated in Figure 12. Pre-existing roadway 90 can include pre-existing concrete slabs 90 (as shown), asphalt or any other type of roadway surface. Even if pre-existing roadway 91 is in disrepair, the precast slabs 94 may be placed on top of the pre-existing surface. Often it may be necessary first to stabilize the pre-existing roadway by injecting expandable polyurethane foam 67, or other suitable material, between the base 81 and the pre-existing roadway 91 in manners well known in the art and discussed herein.

After the pre-existing roadway 91 is stabilized, if needed, then precast slabs 94 are placed on top of pre-existing roadway. The precast slabs 94 then may be leveled and stabilized in manners previously mentioned using foam or by other methods well known in the art. Once the precast slabs 94 are leveled and stabilized, they are tied together using a polymer concrete in the manner previously described for restoring pre-existing roadways. In addition, joint ties, such as the one shown in Figure 3, may be placed into slots running across joint 92 before polymer concrete is integrally placed in joints 92 and slots in the manner previously described in more detail.

### Concrete Pipes and Culverts

Large underground pipes and culverts are often made of concrete and placed underground in sections. Once the sections are in place, they must be locked together. The present invention provides a quick and effective manner for tying the concrete sections together.

The embodiment of Figures 14 and 15 show two concrete pipes bound together. Each of the concrete pipe section 101 and 102 have thickened pipe ends 104 and 105, respectively. When positioning concrete pipe sections 101 and 102 underground, thickened pipe end 104 is placed next to thickened pipe end 105. Once positioned, slots 106 are cut perpendicular to and across joint 103 between the pipe sections 101 and 102. Similar to the examples discussed above, slot 106 is cut only partially through the concrete. One embodiment uses a 12.7 mm (½ inch) wide slot cut several inches into the joined pipe ends 104 and 105. As with the other embodiments of the invention previously discussed, a joint tie may be placed in slot 106 and locked in place with a polymer concrete. The joint tie serves to strengthen the connection. One embodiment uses three ties across joint 103 as shown in Figures 14 and 15. Polymer concrete can also percolate into joint 103 to help seal and bind the pipe ends 104 and 105 together.

### Post and Beam Supports

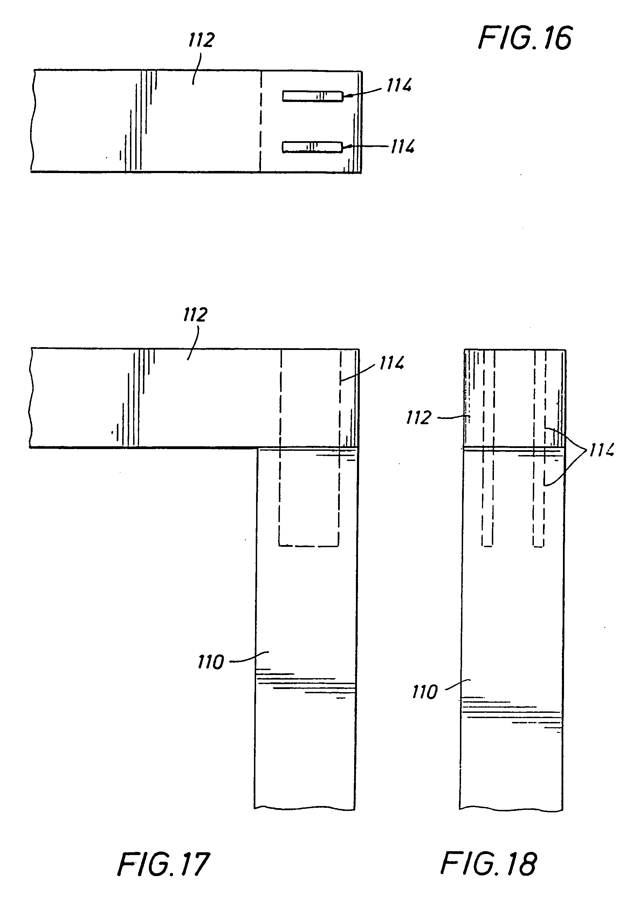

The present invention also works effectively to secure together precast post and beam supports. As illustrated in Figures 16 through 18, precast post 110 and precast beam 112 are properly positioned in any manner well known to the art. Once positioned, slots 114 are cut through the top of the beam 112 down into the post 110. In another embodiment, the slots 114 are formed during the casting of the post 110 and beam 112 and aligned during their positioning. Slots 114 are then filled with a polymer concrete 67 or other similar material in the same manner as discussed for restoring pre-existing roadways. For extra strength, a joint tie, as previously described, may be inserted into slot 114 before the polymer concrete fills the slots.

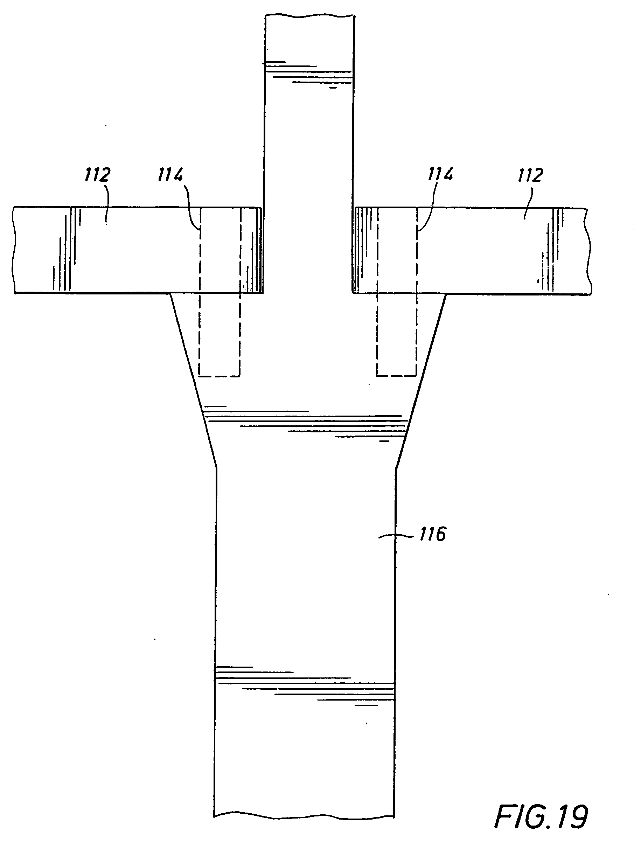

Similarly, the present invention may be used for post and beam supports used for multistory structures such as shown in Figure 19. Slots 114 are cut or pre-formed into beams 112 and post structure 116. The slots 114 are then filled with a polymer concrete to bind the concrete structures. Additionally, a joint tie may be inserted into the slot 114 before the polymer concrete is added.

Although the present invention and its advantages have been described in detail, it should be understood that various changes, substitutions and alterations can be made herein without departing from the scope of the invention as defined by the appended claims. Moreover, the scope of the present application is not intended to be limited to the particular embodiments of the process, machine, manufacture, composition of matter, means, methods and steps described in the specification. For example, the present invention may be applied to the bonding or creating load transfer between any adjacent concrete structures. Additionally, any type of polymer concrete and joint ties may be used within the scope of the invention as defined in the claims. As one of ordinary skill in the art will readily appreciate from the disclosure of the present invention, processes, machines, manufacture, compositions of matter, means, methods, or steps, presently existing or later to be developed that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

## Claims

1. A method for joining concrete members at a joint between first and second concrete members, comprising the steps of:
cutting a slot into said first and said second concrete members, said slot extending generally perpendicular to said joint;
removing excess material from said slot and said joint;
placing aggregate into said slot and joint;
placing a joint tie having first and second ends in said slot, whereby said first end extends into said first concrete member and said second end extends into said second concrete member; and
integrally filling said slot and said joint with polymer concrete,

2. The method of claim 1, wherein said joint tie comprises a fiberglass reinforced plastic tie.

3. The method of claim 1, wherein said joint tie has a hole extending through said joint tie.

4. The method of claim 1, further comprising the steps of cutting a plurality of generally parallel slots into said first and second concrete members, whereby said slots extend generally perpendicular to said joint; and integrally filling said plurality of slots and said joint with polymer concrete.

5. The method of claim 1, further comprising the step of mixing components of a polymer concrete in a static mixture.

6. The method of claim 5, further comprising the step of adding surfactants with isocyanate reactive sites to said polymer concrete.

7. The method of claim 5, further comprising the step of adding low viscosity plasticizers to said polymer concrete.

8. The method of claim 5, further comprising the step of adding polymerization accelerating catalysts to said polymer concrete.

9. The method of any one of the preceding claims, wherein said concrete members are roadway slabs.

10. The method of claim 1, wherein said concrete members include pipes, culverts, and post and beam support structures.

## Patentansprüche

1. Verfahren zum Verbinden von Betonbauteilen an einer Fuge zwischen ersten und zweiten Betonbauteilen, umfassend die folgenden Schritte:
Schneiden eines Schlitzes in die ersten und zweiten Betonbauteile, wobei der Schlitz sich allgemein senkrecht zu der Fuge erstreckt;
Entfernen von überschüssigem Material aus dem Schlitz und der Fuge;
Platzieren eines Aggregats in den Schlitz und die Fuge;
Platzieren einer Fugenverbindung mit ersten und zweiten Enden in den Schlitz, wobei das erste Ende sich in das erste Betonbauteil erstreckt und das zweite Ende sich in das zweite Betonbauteil erstreckt; und
integrales Ausfüllen des Schlitzes und der Fuge mit Polymerbeton.

2. Verfahren gemäß Anspruch 1, wobei die Fugenverbindung eine mit Fiberglas verstärkte Kunststoffverbindung umfasst.

3. Verfahren gemäß Anspruch 1, wobei die Fugenverbindung ein Loch aufweist, das sich durch die Fugenverbindung hindurch erstreckt.

4. Verfahren gemäß Anspruch 1, weiterhin umfassend die Schritte des Schneidens einer Vielzahl von allgemein parallelen Schlitzen in die ersten und zweiten Betonbauteile, wobei die Schlitze sich allgemein senkrecht zu der Fuge erstrecken; und integrales Ausfüllen der Vielzahl an Schlitzen und der Fuge mit Polymerbeton.

5. Verfahren gemäß Anspruch 1, weiterhin umfassend den Schritt des Mischens von Komponenten aus einem Polymerbeton in einem statischen Mischer.

6. Verfahren gemäß Anspruch 5, weiterhin umfassend den Schritt des Hinzufügens von Tensiden mit Isocyanat-reaktiven Stellen zu dem Polymerbeton.

7. Verfahren gemäß Anspruch 5, weiterhin umfassend den Schritt des Hinzufügens von Weichmachern von geringer Viskosität zu dem Polymerbeton.

8. Verfahren gemäß Anspruch 5, weiterhin umfassend den Schritt des Hinzufügens von die Polymerisation beschleunigenden Katalysatoren zu dem Polymerbeton.

9. Verfahren gemäß wenigstens einem der vorhergehenden Ansprüche, wobei die Betonbauteile Straßendammplatten sind.

10. Verfahren nach Anspruch 1, wobei die Betonbauteile Rohre, (Wasser)Durchlässe und Säulen- und Balkenträgerstrukturen einschließen.

## Revendications

1. Procédé pour lier des éléments en béton au niveau d'un joint entre des premier et deuxième éléments en béton, comprenant les étapes consistant à :
former une fente dans lesdits premier et deuxième éléments en béton, ladite fente s'étendant généralement perpendiculairement audit joint ;
retirer le matériau en excès de ladite fente et dudit joint ;
placer de l'agrégat dans ladite fente et ledit joint ;
placer une traverse de joint ayant des première et deuxième extrémités dans ladite fente, moyennant quoi ladite première extrémité s'étend dans ledit premier élément en béton et ladite deuxième extrémité s'étend dans ledit deuxième élément en béton ; et
remplir intégralement ladite fente et ledit joint de béton de résine.

2. Procédé selon la revendication 1, dans lequel ladite traverse de joint comprend une traverse en plastique renforcé de fibre de verre.

3. Procédé selon la revendication 1, dans lequel ladite traverse de joint comporte un trou traversant ladite traverse de joint.

4. Procédé selon la revendication 1, comprenant en outre les étapes consistant à former une pluralité de fentes globalement parallèles dans lesdits premier et deuxième éléments en béton, moyennant quoi lesdites fentes s'étendent globalement perpendiculairement audit joint, puis remplir intégralement ladite pluralité de fentes et ledit joint de béton de résine.

5. Procédé selon la revendication 1, comprenant en outre l'étape consistant à mélanger les composants d'un béton de résine dans un mélange statique.

6. Procédé selon la revendication 5, comprenant en outre l'étape consistant à ajouter audit béton de résine des tensio-actifs comportant des sites réactifs vis-à-vis d'un isocyanate.

7. Procédé selon la revendication 5, comprenant en outre l'étape consistant à ajouter audit béton de résine des plastifiants à faible viscosité.

8. Procédé selon la revendication 5, comprenant en outre l'étape consistant à ajouter audit béton de résine des catalyseurs accélérant la polymérisation.

9. Procédé selon l'une quelconque des revendications précédentes, dans lequel lesdits éléments en béton sont des dalles de chaussée.

10. Procédé selon la revendication 1, dans lequel lesdits éléments en béton comprennent des tuyaux, des galeries et des structures de support à poteaux et à poutres.
